(19) Europäisches Patentamt
European Patent Office
Office européen des brevets

(11) **EP 3 118 449 A1**

(12) **EUROPÄISCHE PATENTANMELDUNG**

(43) Veröffentlichungstag:
18.01.2017 Patentblatt 2017/03

(51) Int Cl.:
*F03D 7/02* (2006.01)     *F03D 7/04* (2006.01)
*F03D 1/06* (2006.01)     *F03D 80/40* (2016.01)

(21) Anmeldenummer: **16178516.7**

(22) Anmeldetag: **12.04.2011**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **19.04.2010 DE 102010015595
08.04.2011 DE 102011007085**

(62) Dokumentnummer(n) der früheren Anmeldung(en)
nach Art. 76 EPÜ:
**11713841.2 / 2 561 221**

(71) Anmelder: **Wobben Properties GmbH
26607 Aurich (DE)**

(72) Erfinder:
• **de Boer, Wolfgang
26802 Moormerland (DE)**

• **Eden, Georg
26556 Westerholt (DE)**
• **Beekmann, Alfred
26639 Wiesmoor (DE)**
• **Lenschow, Gerhard
26603 Aurich (DE)**

(74) Vertreter: **Eisenführ Speiser
Patentanwälte Rechtsanwälte PartGmbB
Postfach 10 60 78
28060 Bremen (DE)**

Bemerkungen:
Diese Anmeldung ist am 08-07-2016 als
Teilanmeldung zu der unter INID-Code 62 erwähnten
Anmeldung eingereicht worden.

(54) **VERFAHREN ZUM BETREIBEN EINER WINDENERGIEANLAGE**

(57) Die vorliegende Erfindung betrifft ein Verfahren zum Betreiben einer Windenergieanlage mit einem aerodynamischen Rotor mit wenigstens einem Rotorblatt, umfassend die Schritte Betreiben der Windenergieanlage in einem von der Windgeschwindigkeit abhängigen Betriebspunkt, Erfassen eines Betriebsparameters des Betriebspunktes, Vergleichen des erfassten Betriebsparameters mit einer vorbestimmten Referenzgröße und Beheizen des wenigstens einen Rotorblatts, wenn der erfasste Betriebsparameter eine vorbestimmte Abweichung zur Referenzgröße überschreitet, wobei der Betrieb der Windenergieanlage fortgesetzt wird.

Fig. 1

EP 3 118 449 A1

**Beschreibung**

Die vorliegende Erfindung betrifft ein Verfahren zum Betreiben einer Windenergieanlage sowie eine entsprechende Windenergieanlage.

Verfahren zum Betreiben einer Windenergieanlage sind hinlänglich bekannt. So ist es beispielsweise üblich, Windenergieanlagen anhand einer vorgegebenen Leistungskennlinie zu betreiben, die von der Windgeschwindigkeit abhängt. Bei Windenergieanlagen mit Rotorblättern mit verstellbarem Rotorblattwinkel - allgemein auch als Pitchwinkel bezeichnet - kann auch dieser zum Realisieren des jeweils gewünschten Betriebspunktes der Windenergieanlage eingestellt werden.

Solche Verfahren zum Betreiben einer Windenergieanlage können jedoch an ihre Grenzen stoßen, wenn unvorhergesehene oder außergewöhnliche Umstände eintreten, wie beispielsweise eine Vereisung an Teilen der Windenergieanlage. Ein besonderes Problem stellt hierbei die Vereisung der Rotorblätter dar. Eine solche Vereisung ist problematisch, weil sie zu Eisfall von den Rotorblättern führen kann, der gefährlich für Personen ist, die sich unterhalb der Rotorblätter aufhalten. Die Gefahr eines solchen Eisfalls kann sich verstärken, sollte die Windenergieanlage in diesem Zustand weiter betrieben werden.

Bei einer Vereisung der Rotorblätter ist zudem problematisch, dass die Eigenschaften der Windenergieanlage verändert werden und eine Regelung der Anlage dadurch gestört werden kann. Zudem besteht je nach Intensität der Eisbildung an der Windenergieanlage, insbesondere an den Rotorblättern die Gefahr der Beschädigung der Windenergieanlage.

Es sind Verfahren bekannt, die versuchen, eine Eisbildung an den Rotorblättern zu erkennen, um die Windenergieanlage dann zum Schutz anzuhalten und abzuschalten. Zudem kann im Stillstand der Anlage versucht werden, das Eis zu entfernen. Aus der DE 103 23 785 A1 ist ein Verfahren zum Erkennen eines Eisansatzes beschrieben.

Problematisch ist hierbei, einen Eisansatz sicher zu erkennen. Weil Sicherheitsaspekte eine hohe, üblicherweise die höchste Priorität haben, erfolgt ein Abschalten der Anlage oftmals schon dann, wenn ein Eisansatz vermutet wird. Hierdurch können unerwünschte und objektiv betrachtet unnötige Ausfallzeiten der Windenergieanlage resultieren. Je nach Aufstellungsort kann sich dies zu erheblichen wirtschaftlichen Einbußen summieren.

Der Erfindung liegt somit die Aufgabe zugrunde, die genannten Nachteile möglichst zu beheben oder zu verringern. Insbesondere soll eine Lösung vorgeschlagen werden, die die Effizienz einer Windenergieanlage erhöht, insbesondere eine Verbesserung des Betriebsverhaltens einer Windenergieanlage bei Eisansatz oder drohendem Eisansatz schafft. Zumindest soll eine Alternative vorgeschlagen werden.

Erfindungsgemäß wird ein Verfahren gemäß Anspruch 1 vorgeschlagen.

Das erfindungsgemäße Verfahren zum Betreiben einer Windenergieanlage geht insbesondere aus von einer Windenergieanlage mit einem Fundament, das einen Turm trägt, an dessen oberen Ende eine Gondel angeordnet ist. Die Gondel weist wenigstens einen Generator und einen damit direkt oder indirekt verbundenen aerodynamischen Rotor auf. Insbesondere wird von einem Rotor mit einer im Wesentlichen horizontalen Achse und einer Nabe mit wenigstens einem, vorzugsweise drei Rotorblättern ausgegangen.

Die Windenergieanlage wird in einem von der Windgeschwindigkeit abhängigen Betriebspunkt betrieben. Beispielsweise wird basierend auf einer vorgegebenen drehzahlabhängigen Leistungskennlinie die vom Generator abgegebene elektrische Leistung eingestellt, bis sich ein stationärer Betriebspunkt mit einer bestimmten Drehzahl und einer bestimmten abgegebenen Leistung einstellt. Dieser Betriebspunkt ist abhängig von der Windgeschwindigkeit. Wenigstens ein Betriebsparameter dieses Betriebspunktes wird erfasst. Beispielsweise wird die vom Generator abgegebene elektrische Leistung erfasst und bildet den erfassten Betriebsparameter. Dies kann ein Messwert oder eine aus einem oder mehreren Messwerten berechnete Größe sein. Als erfasster Betriebsparameter kann auch eine interne Rechengröße oder Steuerungsgröße verwendet werden, die sich beispielsweise beim Betreiben der Windenergieanlage in dem Betriebspunkt ergibt oder sowieso erfasst wird.

Dieser erfasste Betriebsparameter - in obigem Beispiel die abgegebene elektrische Generatorleistung - wird mit einer vorbestimmten Referenzgröße verglichen. Gemäß obigem Beispiel erfolgt ein Vergleich der erfassten Leistung mit einer Referenzleistung.

Wenn nun der erfasste Betriebsparameter eine vorbestimmte Abweichung zur erfassten Referenzgröße überschreitet, wird wenigstens ein Rotorblatt beheizt, wobei der Betrieb der Windenergieanlage fortgesetzt wird. Vorzugsweise werden alle Rotorblätter der Windenergieanlage in diesem Fall beheizt. Unter dem Fortsetzen des Betriebs der Windenergieanlage ist hier insbesondere zu verstehen, dass sich der Rotor weiter dreht und der Generator weiterhin elektrische Leistung abgibt, die weiterhin in ein elektrisches Netz, insbesondere ein elektrisches dreiphasiges Wechselspannungsnetz eingespeist wird.

Das Beheizen kann von weiteren Randbedingungen abhängig gemacht werden.

Als Referenzgröße wird insbesondere eine für den vorliegenden Betriebspunkt, insbesondere für die hierbei vorherrschende Windgeschwindigkeit typischer Wert verwendet. Der erfasste Wert, der auch als Istwert bezeichnet werden kann, wird somit mit einem unter normalen Bedingungen erwarteten Wert verglichen. Geringe Abweichungen werden zugelassen. Wird aber eine vorbestimmte Abweichung zur Referenzgröße überschritten, so ist von einem untypischen Betriebszustand auszugehen. Es wurde nun erkannt, dass es vorteilhaft sein kann, bei einer Abweichung, die auf einen Eisansatz an einem Rotorblatt schließen lässt, die Windenergieanlage nicht anzuhalten und abzuschalten, sondern weiter zu betreiben und durch eine Beheizung des Rotorblattes der angenommenen Vereisung entgegenzuwirken. Die vorbestimmte Abweichung zwischen erfasstem Betriebsparameter und entsprechender Referenzgröße kann dabei so gewählt werden, dass einem Eisansatz in einem frühen Stadium entgegengewirkt wird. Ein Anhalten und Abschalten der Anlage kann somit mitunter verhindert werden. Durch die so geschaffene Möglichkeit, die Windenergieanlage trotz des Verdachts auf einen Eisansatz weiter zu betreiben, kann in Situationen, insbesondere im Winter, wenn bisher die Windenergieanlage abzuschalten gewesen wäre, diese weiter betrieben werden und so die Effizienz erhöht werden. Insbesondere im Winter kann hierdurch die von dem Generator abgegebene elektrische Energiemenge erhöht werden. Durch ein frühes Erkennen eines Eisansatzes und dem Durchführen des Beheizens der Rotorblätter ist das Verfahren auch präventiv einsetzbar.

Die vorbestimmte Abweichung kann als ein fester Wert vorgesehen sein, um den der erfasste Betriebsparameter die Referenzgröße überschreiten oder unterschreiten darf. Es kommt aber auch in Betracht, dass die Abweichung hinsichtlich dem Überschreiten der vorbestimmten Referenzgröße einerseits und Unterschreiten der vorbestimmten Referenzgröße andererseits unterschiedlich gewählt wird. Auch kann die vorbestimmte Abweichung je nach Betriebspunkt oder abhängig von anderen Parametern unterschiedlich gewählt werden.

Vorzugsweise wird zu der betreffenden Referenzgröße ein erster Toleranzbereich und ein zweiter Toleranzbereich vorgegeben, wobei der erste Toleranzbereich innerhalb des zweiten Toleranzbereichs liegt. Die jeweilige Referenzgröße liegt in beiden Toleranzbereichen. Die beiden Toleranzbereiche müssen die Referenzgröße aber nicht gleichmäßig einschließen. Vielmehr kann auch eine Grenze des ersten Toleranzbereiches mit der betreffenden Grenze des zweiten Toleranzbereichs zusammenfallen und gleichzeitig kann die andere Grenze des ersten Toleranzbereiches einen geringeren Abstand zur Referenzgröße definieren als die entsprechende Grenze des zweiten Toleranzbereichs.

Es liegt hier der Gedanke zugrunde, dass eine optimale Leistungsumsetzung des vorherrschenden Windes in von dem Generator abzugebende elektrische Leistung mit Rotorblättern ohne Eisansatz erzielt wird. Treten nun - für das Beispiel der Erfassung der abgegebenen Leistung des Generators als erfasster Betriebsparameter - geringe Abweichungen zwischen der erfassten Leistung und der Referenzleistung auf, so wird zunächst davon ausgegangen, dass hier natürliche Schwankungen oder Änderungen einiger Randparameter, wie der Luftdichte, zugrunde liegen. Für solche kleinen Abweichungen wird somit die Windenergieanlage unverändert weiter betrieben.

Liegt aber der erfasste Betriebsparameter außerhalb des ersten Toleranzbereiches und überschreitet damit eine erste vorbestimmte Abweichung, so ist von einem ungewöhnlichen Umstand auszugehen, wie beispielsweise eines Eisansatzes. Liegt der erfasste Betriebsparameter dabei noch innerhalb des zweiten Toleranzbereiches, so wird von einem noch nicht so starken Eisansatz ausgegangen. In diesem Fall braucht die Windenergieanlage nicht angehalten oder abgeschaltet zu werden, es wird aber ein Beheizen des Rotorblattes durchgeführt, um dem Eisansatz entgegenzuwirken.

Ist die Abweichung nun so groß, dass der erfasste Betriebsparameter auch außerhalb des zweiten Toleranzbereiches liegt, so ist entweder von einem zu starken Eisansatz auszugehen, so dass die Windenergieanlage angehalten wird. Andererseits kann auch eine Störung, beispielsweise in der Erfassung des Betriebsparameters vorliegen. Und auch in diesem Fall ist die Anlage anzuhalten.

Liegt die erfasste Leistung oberhalb der Referenzleistung, also oberhalb der üblichen Leistung, so ist nicht von einem Eisansatz, sondern vielmehr von einer Messstörung oder einer anderen Störung auszugehen. In diesem Fall beträgt der Grenzwert des ersten Toleranzbereichs und des zweiten Toleranzbereichs denselben Wert, weil das Beheizen des Rotorblattes im Falle einer Messstörung nicht zweckmäßig ist. Liegt die erfasste Leistung aber unterhalb der Referenzleistung und damit unterhalb des erwarteten Wertes, so deutet dies auf eine Effizienzverschlechterung der Windenergieanlage hin, die auf einen Eisansatz rückschließen lässt. In diesem Fall wird somit das Beheizen des Rotorblattes durchgeführt, um einer Vereisung entgegenzuwirken, soweit die Abweichung noch nicht so groß ist.

Ist die Abweichung aber zu groß, nämlich so groß, dass der erfasste Betriebsparameter außerhalb des zweiten Toleranzbereichs liegt, so wird die Windenergieanlage angehalten und/oder abgeschaltet, um etwaigen Schäden vorzubeugen. Eine zu starke Abweichung kann auch auf eine nicht korrekt arbeitende Windenergieanlagensteuerung hindeuten.

Gemäß einer weiteren Ausführungsform wird vorgeschlagen, dass der erfasste Betriebsparameter die Leistung ist, insbesondere die von der Windenergieanlage, also von dem Generator erzeugte Leistung und/oder dass die aktuelle Windgeschwindigkeit erfasst wird und die Referenzgröße von der Windgeschwindigkeit abhängig ist. Insbesondere ist die Referenzgröße als von der Windgeschwindigkeit abhängige Referenzkennlinie hinterlegt. Eine Möglichkeit, eine solche Referenzkennlinie aufzunehmen, ist in der DE 103 23 785 A1 beschrieben.

Zum Vergleichen des erfassten Betriebsparameters mit der Referenzgröße kann wie folgt vorgegangen werden. Für die Windenergieanlage wird ein Betriebspunkt abhängig von einem vorbestimmten Zusammenhang zwischen Drehzahl und Leistung eingestellt. Weiterhin wird die vorherrschende Windgeschwindigkeit gemessen, wobei dieser Messwert nicht zum Einstellen des Betriebspunktes verwendet wurde. Zu diesem gemessenen Windgeschwindigkeitswert ist in einer Kennlinie, oder einer Referenztabelle - so genannter lookup-table - ein Referenzwert für die Leistung hinterlegt, die sich üblicherweise, unter normalen Bedingungen einstellt. Die erfasste Leistung, die sich beim Einstellen des Betriebspunktes ergeben hat, wird mit diesem zu der aktuellen Windgeschwindigkeit hinterlegten Wert der Leistung verglichen.

Wenn bei dem aktuellen Betriebspunkt normale Randbedingungen, insbesondere keine Vereisung zugrunde liegen, dürfte sich beim Einstellen des Betriebspunktes eine Leistung einstellen, die der zu der aktuellen Windgeschwindigkeit hinterlegten Leistung als Referenzgröße in etwa entspricht. Geringe Abweichungen können toleriert werden. Treten größere Abweichungen auf, so kann von einer leichten Vereisung ausgegangen werden und eine Beheizung des Rotorblattes wird veranlasst. Insbesondere geschieht dies dann, wenn die erfasste Leistung kleiner ist, als der zugehörige Referenzwert.

Erst wenn die Abweichung zu groß ist, sollte ein Anhalten und/oder eine Abschaltung vorgenommen werden.

Die Verwendung der Leistung ist nur eine Möglichkeit, die insbesondere bei Windenergieanlagen mit verstellbarem Rotorblattwinkel im so genannten Teillastbereich vorgeschlagen wird. Im Teillastbereich wird üblicherweise der Rotorblattwinkel nicht verstellt und ist vielmehr über den gesamten Teillastbereich konstant, also für Windgeschwindigkeiten von einer Anlaufwindgeschwindigkeit, bei der die Windenergieanlage überhaupt erst startet, bis zu einer Nennwindgeschwindigkeit, bei der die Windenergieanlage unter normalen Umständen Nenndrehzahl und Nennleistung erreicht hat.

In diesem Volllastbereich erfolgt im Grunde eine Regelung der Drehzahl mittels Einstellung des Rotorblattwinkels - so genanntes Pitchen - auf Nenndrehzahl. Die Leistung wird auf Nennleistung geregelt. Somit ist - jedenfalls im Idealfall - im Volllastbetrieb die Leistung und die Drehzahl konstant. Somit kann sich auch keine windgeschwindigkeitsabhängige Abweichung der eingestellten Leistung von einer Referenzleistung ergeben. Die eingestellte Leistung ist hier als Indikator für eine Vereisung ungeeignet.

Entsprechend wird im Volllastbetrieb ein Vergleich des eingestellten Rotorblattwinkels mit einem Referenzrotorblattwinkel vorgeschlagen. Auch der Referenzrotorblattwinkel wird abhängig von der Windgeschwindigkeit hinterlegt. Die Verwendung des Rotorblattwinkels als Referenzgröße wird auch vorgeschlagen für einen Bereich, der sich für noch höhere Windgeschwindigkeiten an den Volllastbereich anschließt, nämlich ein so genannter Sturmbereich, der beispielsweise zwischen Windgeschwindigkeiten von 28 m/s bis 42 m/s liegen kann, um nur ein Beispiel zu nennen.

Somit erfolgt eine Eisansatzerkennung im Teillastbereich über den Vergleich der erfassten Leistung mit einer Referenzleistung. Im Volllastbetrieb erfolgt die Erfassung eines Eisansatzes über den Vergleich des eingestellten Rotorblattwinkels mit einem Referenzwinkel. Gleichwohl wird vorzugsweise vorgeschlagen, im Teillastbetrieb und/oder im Volllastbetrieb immer beide Kriterien abzuprüfen, also immer die Leistung mit der Referenzleistung zu vergleichen und immer den eingestellten Rotorblattwinkel mit dem Referenzrotorblattwinkel zu vergleichen. Von einem Eisansatz ist dann auszugehen, wenn nur einer dieser Vergleiche einen solchen Eisansatz anzeigt. Hier liegt die Erkenntnis zugrunde, dass der jeweils ungeeignete Vergleich einen Eisansatz nicht anzeigen würde, auch nicht fälschlicherweise.

Vorzugsweise erfolgt in einem Übergangsbereich vom Teillastbereich zum Volllastbereich bereits ein geringes Verstellen des Rotorblattwinkels. Beispielsweise kann der Rotorblattwinkel im Übergangsbereich um einen empirischen Wert von 0,4° pro 100 kW verstellt werden. Durch die vorgeschlagene gleichzeitige Überprüfung sowohl des Betriebsparameters Leistung als auch des Betriebsparameters Rotorblattwinkel bereitet das beschriebene geringe Verstellen des Rotorblattwinkels im Übergangsbereich vom Teillastbereich zum Volllastbereich dadurch keine Probleme bei der Überwachung eines Eisansatzes. Mit anderen Worten wird der Fehler vermieden, den falschen Betriebsparameter zugrunde zu legen, wenn immer beide überwacht werden.

Gemäß einer weiteren Ausführungsform wird vorgeschlagen, als Referenzgröße zumindest für Teilbereiche der Windgeschwindigkeit einen Maximalwert der betreffenden Betriebsgröße zu verwenden. Dies kann auch vorübergehend vorgesehen sein.

Als Referenzkennlinie wird bevorzugt eine windgeschwindigkeitsabhängige Referenzgröße verwendet. Für jeden Anlagentyp kann eine solche Referenzkennlinie wie beispielsweise eine windgeschwindigkeitsabhängige Leistungskennlinie als Standardkennlinie - auch als Default-Kennlinie bezeichnet - werksseitig hinterlegt sein. Diese Standard-Referenzkennlinie wird unmittelbar nach Inbetriebnahme der Windenergieanlage zunächst verwendet. Letztlich weist aber jede Windenergieanlage ihr eigenes Verhalten auf. Dies kann durch Fertigungsschwankungen und auch abhängig vom jeweiligen Aufstellungsort und weiterer Umstände begründet sein. Aus diesem Grunde passt jede Windenergieanlage im Laufe ihres Betriebs diese Standardkennlinie an. Dies erfolgt durch Verwendung gemessener Werte unter angenommenen normalen Randbedingungen der Windenergieanlage, insbesondere unter Bedingungen, bei denen eine Vereisung ausgeschlossen werden kann. Die gemessenen Werte werden dann zu einer entsprechenden Referenzkennlinie verarbeitet. Bekannte Schwankungen, die beispielsweise bei unterschiedlichen Umgebungstemperaturen, wie beispielsweise 3 °C und 30 °C in der Luftdichte auftreten, können durch einen entsprechenden Anpassungsfaktor berücksichtigt werden. Hierdurch ist es möglich, nur eine Referenzkennlinie trotz schwankender Randbedingungen aufzunehmen.

Es können bei einer Windenergieanlage Randbedingungen auftreten, die zu einer massiven Abweichung der anlagenspezifischen Referenzkennlinie zu der hinterlegten Standard-Referenzkennlinie führen. So können beispielsweise Windenergieanlagen mit einer gezielten Drosselung ihrer Leistung vorgesehen sein, um beispielsweise die durch die Windenergieanlage hervorgerufene Schallimmission zu begrenzen. Dies kann zu einer anderen Referenzkennlinie führen, die die Windenergieanlage im Laufe ihres Betriebs aufnimmt und als geänderte Referenzkennlinie zugrunde legt. Solange eine solche Adaption nicht oder erst für einen Teilabschnitt der Referenzkennlinie erfolgt ist, ist die Referenzkennlinie für die Eiserkennung ungeeignet. In diesem Fall wird vorgeschlagen, den Maximalwert - im vorliegenden Beispiel die Leistungsbegrenzung zum Begrenzen der Schallimmission - zugrunde zulegen. Ein Eisansatz wird dann in diesem Fall angenommen, wenn dieser Maximalwert um einen vorbestimmten Betrag unterschritten wird, der sich von einem Betrag unterscheiden kann, der bei Verwendung einer Referenzkennlinie angesetzt werden würde.

Eine solche Verwendung eines Maximalwertes kann abschnittsweise erfolgen, wenn Teile der Referenzkennlinie bereits adaptiert wurden, andere Teile jedoch noch nicht, oder sie kann zeitweise oder auch zeitweise abschnittsweise erfolgen. Beispielsweise kommt auch in Betracht, dass die Windenergieanlage nur zeitweise mit reduzierter Leistung betrieben werden soll, wenn beispielsweise der Netzbetreiber des Netzes in das die Windenergieanlage einspeist, eine Reduzierung der abgegebenen Leistung fordert. Auch in diesem Fall wird der Maximalwert, der sich aufgrund der Reduzierung ergibt, als Referenzwert zugrunde gelegt. Bereits kurze Zeit später kann eine solche Begrenzung wieder aufgehoben sein.

Gemäß einer Ausführungsform wird vorgeschlagen, dass zum Beheizen des wenigstens einen Rotorblatts erwärmte Luft dem Rotorblatt zugeführt wird und auf einem Strömungspfad durch das Rotorblatt geleitet wird, um das Rotorblatt von innen zu beheizen. Rotorblätter moderner und großer Windenergieanlagen weisen häufig Hohlräume auf, die durch stabilisierende Verbindungsstege voneinander getrennt sind. So wird vorgeschlagen unter Ausnutzung solcher Hohlräume erwärmte Luft innen im Rotorblatt entlang der Rotorblattvorderkante bis in die Nähe der Rotorblattspitze, also dem von der Rotorblattnabe abgewandten Teil des Rotorblattes, zu leiten. Dort in der Nähe der Rotorblattspitze kann eine Öffnung in einem Stabilisierungssteg oder einer anderen Wandung vorgesehen sein, durch die die erwärmte Luft in einen Hohlraum strömt und beispielsweise durch einen mittleren Bereich des Rotorblattes zur Rotorblattwurzel, und damit im Grunde zur Rotorblattnabe zurückzukehren. Hierdurch kann auch auf vorteilhafte Weise ein Umluftstrom erzeugt werden, indem diese zurückkehrende Luft erneut erwärmt und wieder entlang der Vorderkante in das Rotorblatt geleitet wird. Hierfür können ein oder mehrere Lüfter sowie ein oder mehrere Heizelemente vorgesehen sein.

Alternativ oder ergänzend kann ein elektrisches Widerstandsheizelement - wie beispielsweise eine Heizmatte - oder mehrere davon, an zu beheizenden Bereichen des Rotorblattes angeordnet, insbesondere eingebettet sein.

Eine weitere Ausführungsform schlägt vor, dass eine Temperatur an oder in der Nähe der Windenergieanlage erfasst wird, insbesondere eine Außentemperatur und die Windenergieanlage abgeschaltet wird, wenn die erfasste Temperatur eine vorbestimmte Mindesttemperatur unterschreitet und wenn der erfasste Betriebsparameter die vorbestimmte Abweichung zur Referenzgröße überschreitet. Optional wird ein Fehlersignal erzeugt und/oder ausgegeben. Hierzu liegt die Erkenntnis zugrunde, dass bei Temperaturen unter 0 °C zwar eine Vereisung nicht auftreten muss, eine Vereisung oberhalb einer bestimmten Temperatur, wie beispielsweise 2 °C, jedoch ausgeschlossen werden kann. Der Wert von 2 °C liegt gering über dem Gefrierpunkt von Wasser und berücksichtigt damit eine geringe Toleranz der Temperaturmessung oder leichte örtliche Temperaturschwankungen. Sofern also das Kriterium eines Eisansatzes durch Vergleich des Betriebsparameters mit der Referenzgröße detektiert wird, die den vorbestimmten Temperaturwert überschreitende Außentemperatur aber einen Eisansatz ausschließt, muss von einem Fehlerfall ausgegangen werden und es ist ratsam, die Anlage zumindest anzuhalten, vorzugsweise auch abzuschalten. Zum Erkennen und Auswerten des Fehlers wird vorgeschlagen, hierzu ein Fehlersignal zu generieren und an eine Steuereinheit zu übergeben und/oder über einen Kommunikationsverbindung einer Überwachungszentrale zuzuleiten.

Vorzugsweise erfolgt ein Beheizen nur dann, wenn ein vorbestimmter Temperaturwert unterschritten wird, wie beispielsweise ein Wert von 2 °C. Es kann auch bspw. ein Wert von 1 ° C oder 3° C gewählt werden.

Gemäß einer weiteren bevorzugten Ausführungsform wird vorgeschlagen, dass eine Beheizung erst dann erfolgt, wenn der erfasste Betriebsparameter die vorbestimmte Abweichung zur Referenzgröße für eine erste vorbestimmte Mindestzeit überschritten hat. Somit wird vermieden, dass bei einem ersten einen Eisansatz andeutenden Vergleich zwischen Betriebsparameter und Referenzgröße sofort ein Beheizen der Rotorblätter erfolgt. Hier liegt zum einen die Erkenntnis zugrunde, dass das Bilden eines Eisansatzes eine gewisse Zeit benötigt. Außerdem besteht die Möglichkeit, dass ein geringer Eisansatz möglicherweise kurzfristig wieder von alleine weicht oder sich verringert. Schließlich wird auch vermieden, dass eine mögliche einzelne fehlerbehaftete Messung bereits die Beheizung auslöst. Die erste vorbestimmte Zeit kann auch zusammengesetzt sein oder modifiziert werden, also kann beispielsweise eine Mindestzeit von 10 Minuten vorgesehen sein, wobei nicht gefordert werden muss, dass ununterbrochen lang für 10 Minuten ein Eisansatz detektiert wurde. Vielmehr kann vorgesehen sein, diese Mindestzeit um Zeiten zu erhöhen, in denen zwischenzeitlich ein Eisansatz nicht detektiert wurde. Vorteilhafterweise erfolgt eine solche Überprüfung mittels Zähler. Beispielsweise kann im Minutenrhythmus - oder zu anderen Zeiten - ein Vergleich zwischen Betriebsparameter und Referenzgröße vorgenommen werden. Jedes Mal, wenn hierbei ein möglicher Eisansatz detektiert wird, wird ein entsprechender Zähler um einen Wert hochgesetzt, bis er einen vorbestimmten Wert von beispielsweise 10 erreicht. Tritt zwischendurch die Situation auf, dass ein Eisansatz nicht detektiert wird, so kann der Zähler auch herunter gezählt werden.

Vorzugsweise wird gleichzeitig eine Außentemperatur berücksichtigt, so dass generell nur dann von einem Eisansatz ausgegangen wird, wenn eine vorbestimmte Außentemperatur z.B. im Bereich von 1° bis 3°, insbesondere 2°C erreicht oder unterschritten wird und auch Zeiten, in denen die Außentemperatur größer ist, werden generell nicht berücksichtigt. Der oben beschriebene Zähler zum Erkennen der Mindestzeit läuft also nur dann hoch, wenn die Außentemperatur niedrig genug ist.

Weiterhin wird ergänzend oder optional vorgeschlagen, dass eine Abschaltung der Windenergieanlage erst dann erfolgt, wenn der erste Betriebsparameter außerhalb eines bzw. außerhalb des zweiten Toleranzbereiches für eine vorbestimmte Mindestzeit lag. Auch hierdurch wird ein zu sensitives Abschalten oder Anhalten vermieden.

Günstig ist es, wenn die Windenergieanlage nach einem Anhalten oder einer Abschaltung, also generell nachdem sie gestoppt wurde, bedingt durch die Erfassung eines Betriebsparameters außerhalb des zweiten Toleranzbereiches, diese nach einer vorbestimmten Wiedereinschaltzeit wieder gestartet wird. Diese Wiedereinschaltzeit kann mehrere Stunden, wie beispielweise 6 Stunden betragen. Zum einen kann bei einer Beheizung der Rotorblätter im gestoppten Zustand nach 6 Stunden mit einer erfolgreichen Enteisung gerechnet werden, zum anderen kann dies eine ausreichende Zeit sein, nach der sich etwaige Wetterbedingungen wieder geändert haben. Die Windenergieanlage kann nun wieder gestartet und zumindest teilweise hochgefahren werden, wobei auch hierbei Kriterien zur Erkennung eines Eisansatzes überwacht werden. Ergeben sich hierbei Kriterien, die auf einen Eisansatz schließen lassen, so sollte nicht zu lange damit gewartet werden, die Anlage wieder zu stoppen und erneut die vorbestimmte Wiedereinschaltzeit abzuwarten. Somit wird vorgeschlagen, die Windenergieanlage dann wieder zu stoppen, wenn der erfasste Betriebsparameter außerhalb des zweiten Toleranzbereichs für eine dritte vorbestimmte Mindestzeit lag, die kleiner ist als die zweite vorbestimmte Mindestzeit. Auch diese dritte vorbestimmte Mindestzeit kann mithilfe eines Zählers überwacht werden. Es kann hierfür derselbe Zähler verwendet werden wie für die zweite vorbestimmte Mindestzeit. Die kürzere Zeit wird dann dadurch realisiert, dass der Zähler nach dem Stoppen nicht auf null geändert, sondern nur um wenige Werte reduziert wird. Entsprechend ist der Zähler durch wenige Werte wieder bei seinem Maximalwert, der ein Stoppen zur Folge hat.

Günstig ist es, wenn im Falle einer Beheizung dies für eine vorbestimmte vierte Mindestzeit aufrechterhalten wird. Hier liegt die Erkenntnis zugrunde, dass das Beheizen ein Abtauen und/oder Verhindern eines Eisansatzes bewirken soll. Dabei wird von thermischen Zeitkonstanten ausgegangen, unterhalb derer ein Beheizen wenig sinnvoll erscheint. So kann beispielsweise zumindest für 10 Minuten oder zumindest für 20 Minuten beheizt werden.

Ebenso wird vorgeschlagen, nach Beenden eines Heizvorgangs ein erneutes Beheizen erst nach einer vorbestimmten fünften Mindestzeit vorzunehmen. Hierdurch kann ein schnelles Ein- und Ausschalten der notwendigen Heizvorrichtung vermieden werden. Das Vorgeben der vorbestimmten fünften Mindestzeit kann beispielsweise durch Verwendung eines für die erste vorbestimmte Mindestzeit vorzugsweise zu verwendenden Zählers erfolgen. Dieser Zähle kann um eine entsprechende Anzahl, die der fünften vorbestimmten Mindestzeit entspricht, reduziert werden und zum Beheizen müsste dann der Zähler entsprechend erst um diese Werte hochgezählt werden.

Erfindungsgemäß wird zudem eine Windenergieanlage gemäß Anspruch 7 vorgeschlagen.

Vorzugsweise weist die Windenergieanlage ein Anemometer auf. Mittels des Anemometers wird die Windgeschwindigkeit gemessen und es kann ein windgeschwindigkeitsabhängiger Referenzwert aus einer entsprechenden Referenzkennlinie oder einer entsprechenden Referenztabelle entnommen werden. Vorzugsweise wird ein Ultraschall-Anemometer verwendet, das selbst keine beweglichen Teile aufweist. So ist es möglich, dass die Rotorblätter vereisen, wohingegen das Ultraschall-Anemometer nicht vereist oder zumindest die Vereisung des Ultraschall-Anemometers so gering ist, dass eine Windgeschwindigkeit noch verlässlich gemessen werden kann.

Vorzugsweise weist eine Windenergieanlage eine zentrale Steuereinheit auf, mit der ein erfindungsgemäßes Verfahren zum Betreiben einer Windenergieanlage durchgeführt werden kann. Die Steuereinheit kann hierfür entsprechende Programmcodes zum Steuern implementiert haben und die Steuereinheit kann zudem einen Datenspeicher umfassen, der eine oder mehrere Referenzkennlinien und/oder Referenztabellen mit Referenzgrößen umfasst, die zum Ausführen des Verfahrens zum Betreiben der Windenergieanlage verwendet werden.

Günstig ist es, wenn die Kennlinie wenigstens für einen Abschnitt, insbesondere im Teillastbereich, als kubische Funktion hinterlegt ist, z.B. für die Leistung in Abhängigkeit von der Drehzahl oder für die Leistung P als Funktion in Abhängigkeit von der Windgeschwindigkeit $V_W$ wie folgt:

$$P = a + b*V_W + c*V_W^2 + d*V_W^3$$

Die Koeffizienten a,b,c und d können aus Messwerten ermittelt werden. Eine kubische Kurve liegt auch dann vor, wenn einer oder mehrere der Koeffizienten a,b und c den Wert null annehmen, wenn d ungleich null ist.

Vorzugsweise ist zudem eine Heizvorrichtung vorgesehen, die wenigstens ein Gebläse und wenigstens ein Heizelement aufweist, die in einem Gerät integriert sein können. Vorzugsweise ist eine solche Heizvorrichtung für jedes Rotorblatt vorgesehen. Günstig ist es zudem, wenn das Rotorblatt im Bereich seiner Rotorblattspitze im Inneren des Rotor-blattes eine Durchgangsöffnung aufweist, um einen Luftstrom zum Beheizen im Bereich der Rotorblattspitze umzuleiten.

Gemäß einer anderen Ausführungsformen wird alternativ oder ergänzend ein Widerstandsheizelement wie eine Heizmatte oder eine Anordnung mehrerer Heizmatten verwendet.

Weiterhin wird ein Verfahren zum Betreiben einer Windenergieanlage mit einem aerodynamischen Rotor mit wenigstens einem Rotorblatt, vorgeschlagen bei dem überwacht wird, ob eine Vereisung an der Windenergieanlage vorhanden ist, insbesondere mittels eines Eissensor zur Erkennung eines Eisansatzes, und bei der das wenigstens eine Rotorblatt beheizt wird, wenn ein Eisansatz detektiert wurde, wobei der Betrieb der Windenergieanlage fortgesetzt wird.

Hier kann ein Eisansatz mit einem Sensor erfasst werden, oder der Eisansatz wird bspw. so erkannt, wie oben beschrieben wurde. Auch bei dieser Vorgehensweise wird vorgeschlagen, im Falle eines Eisansatzes nicht die Anlage abzuschalten, sondern unter Beheizung der Rotorblätter weiter zu betreiben, insbesondere soll sich der aerodynamische Rotor der Windenergieanlage weiter drehen und die Windenergieanlage soll weiter Energie in das Netz einspeisen.

Weiterhin wird ein Verfahren zum Betreiben eines Windparks vorgeschlagen, umfassend mehrere, miteinander kommunizierende Windenergieanlagen, jeweils mit einem aerodynamischen Rotor mit wenigstens einem Rotorblatt, das überwacht, ob eine Vereisung an wenigstens einer der Windenergieanlagen vorhanden ist, insbesondere mittels eines Eissensor zur Erkennung eines Eisansatzes, und das das wenigstens eine Rotorblatt jeder der Windenergie, beheizt wird, wenn ein Eisansatz detektiert wurde, wobei der Betrieb der Windenergieanlagen des Windparks fortgesetzt wird.

Hier liegt die Erkenntnis zugrunde, dass eine genaue und verlässliche Erfassung eines Eisansatzes einen teuren Spezialsensor benötigen kann. Die Umweltbedingungen, insbesondere Wetterbedingungen, die zu einem Eisansatz führen, sind aber innerhalb eines Windparks für die einzelnen Windenergieanlagen zumindest ähnlich. Es kann dann ausreichend sein, nur eine Windenergieanlage zu überwachen, die repräsentativ für den Windpark, zumindest aber für einen Teil des Windparks ist.

Die Kommunikation der Windenergieanlagen eines Windparks untereinander erfolgt bspw. über ein auf Windenergieanlagen angepasstes SCADA-System (Supervisory Control and Data Acquisition).

Auch bei der Verwendung eines Sensors zur Erfassung eines Vereisungszustandes wird vorzugsweise vorgeschlagen, eines oder mehrere der Verfahrensschritte bzw. Merkmale oder Kriterien zu übernehmen, die oben im Zusammenhang mit der Erfassung einer Vereisung mittels Vergleich eines erfassten Parameters mit einer Referenzgröße beschrieben wurden. Dies betrifft insbesondere, aber nicht ausschließlich, die Verwendung der Verzögerungszeiten und die Verwendung von Zählern. Auch die Auswertung der Außentemperatur kann in gleicher Weise eingesetzt werden, so weit das anwendbar ist.

Vorzugsweise erfolgt ein Beheizen bereits dann, wenn die Außentemperatur einen vorbestimmten Wert wie bspw. im Bereich von 1°C bis 3°C, insbesondere 2°C, unterschritten wird, ohne dass weitere Untersuchungen hinsichtlich Eisansatzes unternommen werden. In diesem Fall wird auf eine Eisansatzerkennung verzichtet und es erfolgt unterhalb dieses Temperaturwertes ein Dauerbeheizen, bis die vorbestimmte Temperatur wieder überschritten wird. Es wurde hier erkannt, dass die erzeugte zusätzliche Energie durch die Verbesserung der Aerodynamik der Rotorblätter durch das Abtauen des Eises größer ist als die zum Beheizen eingesetzte Energie. Die gesamte Energiebilanz kann somit durch das Beheizen auch dann verbessert werden, wenn bei kalten Temperaturen immer beheizt wird. Es wurde erkannt, dass ein größerer Energieverlust zu erwarten ist, wenn ein unerkannter Eisansatz nicht bekämpft wird, als wenn unnötig beheizt wird. Dies gilt besonders dann, wenn die Heizleistung wie oben beschrieben abhängig von der erzeugten Energie gesteuert wird.

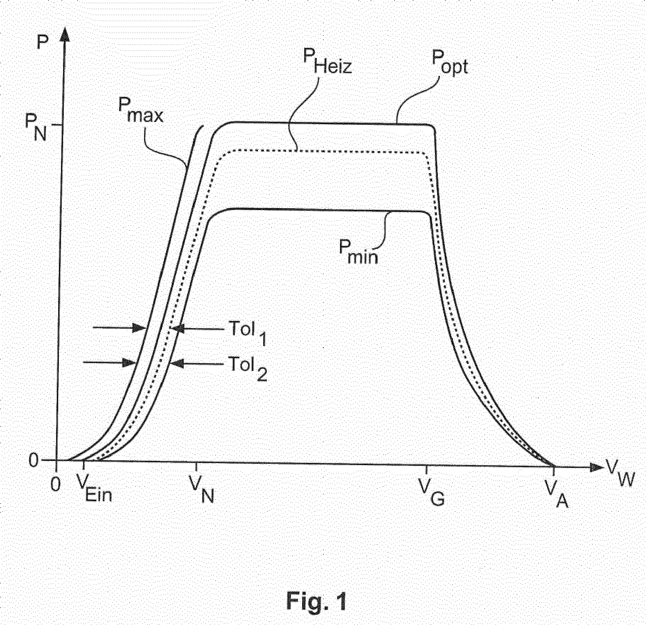

Eine Möglichkeit, ein solches temperaturabhängiges Dauerheizen steuerungstechnisch zu realisieren, besteht darin, den oben beschriebenen Toleranzbereich auf null zu setzen. Am Beispiel der Figur 1 bedeutet das, dass $P_{Heiz}$ auf 100% von $P_{Opt}$ gesetzt wird, oder auf einen noch höheren Wert.

Gemäß einer weiteren Ausführungsform wird ein Rotorblatt vorgeschlagen zum Befestigen an einer Rotorblattnabe, nämlich einer Nabe eines Rotors einer Windenergieanlage. Das Rotorblatt umfasst einen Hauptabschnitt, zum Befestigen an der Nabe. Das Rotorblatt umfasst ferner einen Endabschnitt zum Befestigen an dem Hauptabschnitt. Es kann zusätzlich wenigstens ein Zwischenabschnitt vorgesehen sein und in dem Fall kann der Endabschnitt an dem Zwischenabschnitt befestigt sein, nämlich zusätzlich oder alternativ.

Der Hauptabschnitt und der Endabschnitt werden insbesondere bei der Fertigung zunächst als separate Teile vorgesehen und werden später, insbesondere bei der Errichtung der Windenergieanlage, zusammengesetzt. Das Zusammensetzen erfolgt vorzugsweise durch Verschrauben. Insbesondere trägt bestimmungsgemäß die Nabe den Hauptabschnitt und der Hauptabschnitt den Endabschnitt.

Der Hauptabschnitt umfasst einen Blattwurzelbereich zum Befestigen an der Nabe und einen Anschlussbereich zum Befestigen mit dem Endabschnitt und/oder dem bzw. einem Zwischenabschnitt, wobei in dem Hauptabschnitt ein Luftleitmittel zum Durchleiten erwärmter Luft durch den Hauptabschnitt vom Wurzelbereich zum Endabschnitt vorgesehen ist, wobei das Luftleitmittel so ausgestaltet ist, dass die erwärmte Luft beim Durchleiten nicht mit dem Hauptabschnitt in Kontakt kommt. Es wird somit erwärmte Luft durch den Hauptabschnitt hindurch geleitet, die aber nicht zum Erwärmen des Hauptabschnitts verwendet wird sondern erst den Endabschnitt erwärmen soll.

Vorzugsweise ist ein Rotorblatt vorgesehen, das dadurch gekennzeichnet ist, dass

in dem Hauptabschnitt Bereiche mit einer flächigen Heizvorrichtung zum Beheizen des Rotorblattes und Bereiche mit einer thermischen Isolierung zum Verhindern eines Wärmeverlustes aus dem Rotorblatt vorgesehen sind,

dass der Hauptabschnitt im Wesentlichen aus Metall, insbesondere Stahl gefertigt ist,

dass der Endabschnitt im Wesentlichen auf einem Verbundwerkstoff, insbesondere glasfaserverstärktem Kunststoff (GFK) gefertigt ist und/oder

der Endabschnitt partiell nach außen isoliert ist.

Diese Merkmale werden vorzugsweise in Kombination vorgesehen, bilden aber auch jedes für sich eine günstige Ausgestaltung. Durch eine Kombination eines Hauptabschnitts aus Metall mit einem Endabschnitt aus einem Verbundwerkstoff können die Vorzüge eines metallischen Werkstoffs wie Stabilität und Blitzschutz, genutzt werden, wobei gleichzeitig ein vergleichsweise leichtes Rotorblatt vorgesehen werden kann.

Weiterhin wird ein Windpark vorgeschlagen, der ein erfindungsgemäßes Verfahren implementiert hat.

Nachfolgend wird die vorliegende Erfindung anhand von Ausführungsbeispielen unter Bezugnahme auf die begleitenden Figuren beispielhaft erläutert.

Figur 1 zeigt schematisch eine leistungsoptimierte Kennlinie mit einem ersten und einem zweiten Toleranzbereich für die Leistung einer Windenergieanlage in Abhängigkeit der Windgeschwindigkeit.

Figur 2 zeigt schematisch Leistungskennlinien ähnlich der Figur 1, aber für einen schalloptimierten Betrieb.

Figur 3 zeigt schematisch ein Rotorblatt in einer Teilschnittansicht mit veranschaulichtem Umluftstrom.

Figur 4 zeigt schematisch ein Rotorblatt gemäß einer weiteren Ausführungsform in einer perspektivischen, teilweise aufgeschnittenen Ansicht.

Figur 5 zeigt einen Ausschnitt des Rotorblattes der Figur 4 in einer anderen Ansicht.

Die nachfolgenden Figuren können gleiche Bezugzeichen bzw. Bezeichnungen für ähnliche, gegebenenfalls nicht identische Merkmale aufweisen.

Figur 1 zeigt ein Diagramm, in dem die Leistung der Windenergieanlage, nämlich die vom Generator abgegebene Leistung P über die Windgeschwindigkeit $V_W$ dargestellt ist. Die mit $P_{opt}$ gekennzeichnete Kennlinie stellt einen Verlauf der Leistung für den Fall einer leistungsoptimalen Regelung der Windenergieanlage dar, wie er aufgrund längerer Betriebsdauer der zugrunde liegenden Windenergieanlage ermittelt wurde. Weiterhin ist eine minimale Leistungskennlinie $P_{min}$ und eine maximale Leistungskennlinie $P_{max}$ eingezeichnet. Die beiden Kennlinien $P_{min}$ und $P_{max}$ schließen die leistungsoptimierte Kennlinie $P_{opt}$ jedenfalls in einem Anfangsbereich ein und bilden einen zweiten Toleranzbereich $Tol_2$. Wenn die erfasste Leistung bei der dazu gemessenen Windgeschwindigkeit $V_W$ von dem Referenzwert $P_{opt}$ so stark abweicht, dass dieser außerhalb des zweiten Toleranzbereiches $Tol_2$, also unterhalb der Kennlinie $P_{min}$ oder oberhalb der Kennlinie $P_{max}$ liegt, wird die Windenergieanlage angehalten und gegebenenfalls abgeschaltet. $P_{min}$ kann beispielsweise im Bereich von der Nennwindgeschwindigkeit $V_N$ bis zur Grenzwindgeschwindigkeit $V_G$, ab der die Windenergieanlage in der Leistung reduziert wird, 75 % der leistungsoptimierten Kennlinie betragen.

Die maximale Leistung $P_{max}$ ist nur für den Teillastbereich, nämlich etwa bis zur Nennwindgeschwindigkeit $V_N$ vorgegeben. Eine weitere Festlegung des Verlaufs von $P_{max}$ ist entbehrlich, weil im weiteren Verlauf, also ab Windgeschwindigkeiten der Nennwindgeschwindigkeit $V_N$ nicht mit größeren Leistungen als dem jeweiligen Wert von $P_{opt}$ zu rechnen ist.

Weiterhin ist in der Figur 1 eine Kennlinie $P_{Heiz}$ gestrichelt dargestellt. Wenn der gemessene Leistungswert, wobei die Leistung beispielsweise über eine bestimmte Zeit, wie 10 Minuten, gemittelt sein kann, zu der betreffenden Windgeschwindigkeit von dem leistungsoptimierten Wert $P_{opt}$ so stark abweicht, diese nämlich so stark unterschreitet, dass der Wert unterhalb der Kennlinie $P_{Heiz}$ liegt, aber oberhalb der Kennlinie $P_{min}$, so wird der Betrieb der Windenergieanlage fortgesetzt, der Rotor dreht weiter, es wird weiter Leistung erzeugt und die Rotorblätter der Windenergieanlage werden beheizt. Oberhalb der leistungsoptimierten Kennlinie $P_{opt}$ ist keine zu $P_{Heiz}$ analog zu verstehende Kennlinie eingezeichnet. Das bedeutet, dass beim Überschreiten des jeweiligen Wertes der Kennlinie $P_{opt}$ in keinem Fall ein Beheizen der Rotorblätter erfolgt.

Die gestrichelte Kennlinie $P_{Heiz}$ bildet somit mit

der Kennlinie von $P_{max}$ einen ersten Toleranzbereich $Tol_1$. Solange die erfasste Leistung in diesem ersten Toleranzbereich liegt, wird weder ein Beheizen der Rotorblätter initiiert, noch wird die Windenergieanlage angehalten. Vielmehr wird die Windenergieanlage unverändert weiter betrieben. Liegt der erfasste Wert der Leistung jedoch außerhalb des ersten Toleranzbereiches, aber innerhalb des zweien Toleranzbereiches, und damit zwischen der gestrichelten Kennlinie $P_{Heiz}$ und der Kennlinie $P_{min}$, so erfolgt ein Beheizen der Rotorblätter.

Der Wert von $P_{Heiz}$ beträgt im gezeigten Beispiel insbesondere im Volllastbereich etwa 90 % des Wertes von $P_{opt}$. Auch im übrigen Bereich kann der Wert von $P_{Heiz}$ beispielsweise 90 % von $P_{opt}$ annehmen.

Es ist zu beachten, dass die Werte für $P_{Heiz}$ und auch $P_{min}$ für den gesamten relevanten Windgeschwindigkeitsbereich von $V_{Ein}$ bis $V_A$ bestimmt und dargestellt sind. Gleichwohl wird ab etwa der Nennwindgeschwindigkeit $V_N$ eine Überwachung basierend auf dem Vergleich eines erfassten Rotorblattwinkels mit einem windgeschwindigkeitsabhängig hinterlegten Rotorblattwinkel relevant, was in der Figur 1 jedoch nicht dargestellt ist. Die weitere Überwachung von $P_{Heiz}$ und $P_{min}$ wird fortgesetzt, stört eine solche rotorblattabhängige Überwachung im Grunde aber nicht und dürfte in diesem Bereich auch nicht zum Erkennen eines Eisansatzes führen.

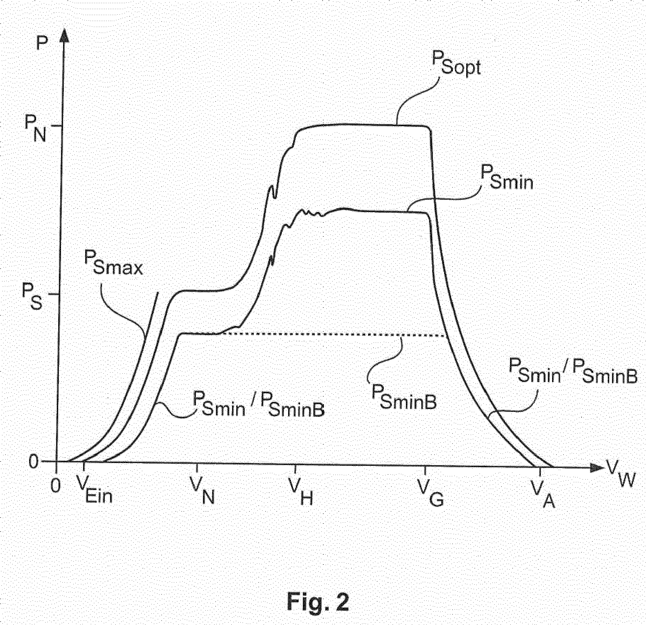

Der Figur 2 liegt ein schalloptimierter Betrieb zugrunde. Bei diesem schalloptimierten Betrieb soll die Leistung einen reduzierten Leistungswert $P_s$ nicht überschreiten, um Schallimmissionen in Grenzen zu halten. Die anlagenspezifische Kennlinie soll durch die Kennlinie $P_{Sopt}$ gekennzeichnet sein. Im, in der Figur 2 dargestellten Fall, ist die Verifizierung der Leistungskennlinie für die Anlage jedoch noch nicht abgeschlossen. Es liegt also eine Standardkennlinie zugrunde, die diese Reduzierung nicht berücksichtigt, und zu der eine anlagenspezifische Kennlinie, die diese Reduzierung berücksichtigt, noch nicht vollständig erfasst werden konnte. Im Bereich der Grenzwindgeschwindigkeit und auch noch davor nimmt $P_{Sopt}$ daher noch den Wert der Nennleistung $P_N$ an. Im gezeigten Beispiel wurde die Windenergieanlage noch nicht bzw. noch nicht nennenswert bei Windgeschwindigkeiten betrieben, die etwa oberhalb der hilfsweise eingezeichneten Windgeschwindigkeiten $V_H$ liegen. Daher nimmt $P_{Sopt}$ teilweise noch die dargestellten hohen Werte an. Sobald die Windenergieanlage ausreichend oft bei den verbleibenden Windgeschwindigkeiten etwa ab der hilfsweise eingezeichneten Windgeschwindigkeit $V_H$ betrieben wurde, dürfte der Maximalwert der optimierten Leistungskennlinie $P_{Sopt}$ den Wert von $P_S$, der hier etwa 50 % der Nennleistung $P_N$ beträgt, aufweisen. Die als untere Grenze entsprechend berechnete Leistungskennlinie $P_{Smin}$ orientiert sich an dem teilweise noch nicht korrekten Verlauf von $P_{Sopt}$. So nimmt der Verlauf $P_{Smin}$ im Bereich zwischen der hilfsweisen Windgeschwindigkeit und der Grenzwindgeschwindigkeit $V_G$ den Wert von 75 % von $P_{Sopt}$ an. Wird nun - erstmalig - die Windenergieanlage mit einer Windgeschwindigkeit in diesem Bereich betrieben, so wird eine Leistung eingestellt, die den Wert $P_S$ nicht überschreitet, weil dies die absolute Obergrenze im vorliegenden Fall ist. Für eine Windgeschwindigkeit $V_H$ lege eine solche Leistung aber unterhalb von $P_{Smin}$. Als Folge müsste die Windenergieanlage gestoppt werden. Um ein solches unerwünschtes Stoppen zu vermeiden, wird ein beschränkter Minimalwert für $P_{Smin}$ bestimmt, der als Kennlinie $P_{SminB}$ dargestellt ist. Diese Kennlinie liegt etwa 75 % unterhalb der derzeitigen Kennlinie von $P_{Sopt}$, aber maximal bis 75 % des maximal zulässigen Wertes von $P_S$. Ein Stoppen der Windenergieanlage erfolgt somit erst, wenn ein Leistungswert unterhalb dieser Kennlinie $P_{SminB}$ auftritt.

In der Figur 2 ist auch zu erkennen, dass für die Windgeschwindigkeiten, für die der Leistungswert $P_{Sopt}$ die maximal zulässige - schalloptimierte - Leistung $P_S$ nicht überschreitet, der Verlauf der Kennlinie $P_{Smin}$ und der Kennlinie $P_{SminB}$ zusammenfallen. Der Verlauf der maximalen Leistungskennlinie $P_{Smax}$ ist von der Problematik im Grunde unbeeinflusst, wobei die Kennlinie von $P_{Smax}$ beim Erreichen der maximalen schalloptimierten Leistung $P_S$ endet.

Die Figuren 1 und 2 zeigen eine Anlage mit einer Nennleistung von 2000 kW und eine auf einen Leistungswert von 1000 kW schalloptimierten Kennlinienverlauf in der Figur 2 als $P_{Sopt}$.

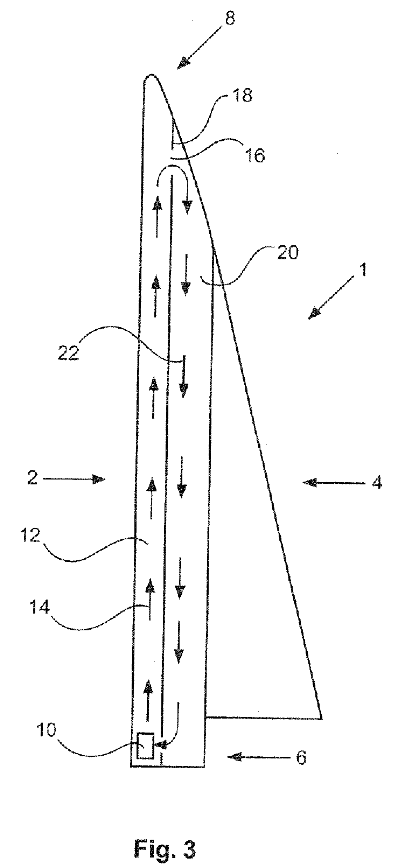

Das Rotorblatt 1 der Figur 3 weist eine Vorderkante 2 und eine Hinterkante 4 auf. Weiterhin ist eine Rotorblattwurzel 6 dargestellt, mit der das Rotorblatt 1 an einer Rotorblattnabe befestigt wird. Schließlich ist eine Rotorblattspitze 8 dargestellt, die sich an der der Rotorblattwurzel 6 abgewandten Seite befindet.

Zum Beheizen des Rotorblattes 8 ist eine Heizvorrichtung 10 dargestellt, die im Bereich der Rotorblattwurzel 6 angeordnet ist. Andere Ausführungsformen sind denkbar, bei der die Heizvorrichtung 10 nicht im Rotorblatt, sondern in der Rotorblattnabe in unmittelbarer Nähe der Rotorblattwurzel angeordnet ist. Ebenso könnte die Heizvorrichtung 10 an der Rotorblattnabe befestigt sein, aber derart, dass sie in den Wurzelbereich der Rotorblattwurzel 6 hineinragt. Vorzugsweise wird die Heizvorrichtung 10 so angeordnet, dass eine elektrische Verbindung zwischen Rotorblatt 1 und Rotornabe vermieden wird.

Die Heizvorrichtung 10 ist hier nur als Symbol dargestellt, wobei sie ein Gebläse und wenigstens ein Heizelement, insbesondere ein Widerstandsheizelement, wie beispielsweise Heizdrähte aufweist. Die Heizvorrichtung 10 bläst dann aufgeheizte, zumindest angewärmte Luft entlang einer ersten Kammer 12, die unmittelbar benachbart zur Vorderkante 2 angeordnet ist. Die erzeugte heiße Luft ist hier als Luftstrom 14 durch Pfeile symbolisiert. Der Heißluftstrom 14 strömt dann bis zur Nähe der Rotorblattspitze 8 und tritt dort durch eine Öffnung 16, die in einer Wandung 18 angeordnet ist. Dadurch gelangt die Luft in eine mittlere Kammer 20 und strömt in dieser als Rückstrom 22, der durch entsprechende Pfeile symbolisiert ist, zur Rotorblattwurzel 6 zurück. Die mit dem Rückstrom 22 zurückströmende Luft wird im Bereich der Rotorblattwurzel 6 durch die Heizvorrichtung 10 wieder angesogen, aufgeheizt und erneut in die erste Kammer 12 geblasen.

Das Beheizen erfolgt somit im Wesentlichen durch einen Umluftstrom. Es ist zu beachten, dass das Rotorblatt 1 zur Erläuterung der Funktionalität des Beheizens nur schematisch dargestellt ist. Insbesondere die erste Kammer 12 und die mittlere Kammer 20 sind hier sehr vereinfacht dargestellt.

Die Eisansatzerkennung durch Überwachung der Anlagenleistung, die dem vorliegenden Verfahren zum Betreiben einer Windenergieanlage zugrunde liegt, basiert darauf, dass sich die aerodynamischen Eigenschaften eines Rotorblattes durch Vereisung verändern. Um diese anlagenspezifischen, aerodynamischen Eigenschaften messen und überwachen zu können, ist es erforderlich oder zumindest wünschenswert, diese aufzuzeichnen, wenn die Anlage unbegrenzt läuft, also insbesondere nicht in der Leistung begrenzt ist, um diese Eigenschaften bzw. entsprechende Werte dann mit den Daten, die bei Temperaturen um bzw. unter dem Gefrierpunkt gemessen werden, zu vergleichen.

Bei der Erstinbetriebnahme wird eine für das Rotorblatt der jeweiligen Anlage typische Standardleistungskennlinie zugrunde gelegt und in der Steuerung der Windenergieanlage gespeichert. Bei dieser Kennlinie handelt es sich um eine vermessene Leistungskennlinie über die Windgeschwindigkeit für den jeweiligen Anlagentyp bzw. Blatttyp.

Bei Außentemperaturen größer als + 2 °C wird diese so genannte Default-Kennlinie in Abhängigkeit der gemessenen Windgeschwindigkeit allmählich korrigiert. Dazu wird jeweils ein Mittelwert der Windgeschwindigkeit und der Leistung typischerweise über 60s gebildet. Um Dichte-Schwankungen, die durch unterschiedliche Lufttemperaturen hervorgerufen werden, auszugleichen, wird die gemessene Leistung jeweils mit einer außentemperaturabhängigen Korrektur versehen. Dadurch spielt es kaum eine Rolle, ob die Kennlinie bei + 3 °C oder + 30 °C aufgezeichnet wird. Der zu der gemessenen Windgeschwindigkeit gehörende Wert der Leistungskennlinie wird dann in Abhängigkeit der gemessenen Leistung um einen geringen Teil der Abweichung vom gespeicherten Wert nach oben bzw. unten korrigiert. Dadurch bildet sich, je nach dem wie lange die Anlage bei verschiedenen Windgeschwindigkeiten betrieben wurde, eine anlagenspezifische Leistungskennlinie über die gemessene Windgeschwindigkeit.

Die Korrektur der Kennlinie erfolgt in einem Fall nur, wenn die Anlage unbegrenzt läuft. Das bedeutet, dass weder die Rotorblätter über den vorgegebenen minimalen Blattwinkel zurückgefahren, also zurückgepitcht sind, noch dass die Anlagenleistung durch eine Maximalleistung, die unterhalb der eingestellten Nennleistung liegt, begrenzt wird. Außerdem erfolgt die Korrektur der Kennlinie, wie oben bereits erwähnt, nur bei Außentemperaturen größer als + 2 °C, da unterhalb dieser Temperatur die Gefahr von Eisansatz besteht, was dann zu einer Verfälschung der Kennlinie führen und die Eisansatzerkennung unwirksam machen würde.

Da die Anlagen im leistungsoptimierten und schalloptimierten Betrieb mit unterschiedlichen Parametern betrieben werden, ist es erforderlich, für die beiden Betriebszustände unabhängige Kennlinien aufzuzeichnen. Die Inhalte der gespeicherten Leistungskennlinien für den leistungsoptimierten und schalloptimierten Betrieb können manuell angezeigt und/oder ausgewählt werden.

Die Leistungskennlinien werden im Betrieb der Windenergieanlage aufgezeichnet, wobei die Aufzeichnung bei Temperaturen kleiner oder gleich + 2 °C gestoppt wird und mit der Eisansatzerkennung begonnen wird. Dazu wird ein Zähler eingesetzt, der bei Außentemperaturen unter 2 °C hochzählt und die Möglichkeit einer Vereisung der Anlage entsprechend dauerhaft speichert. Bei Außentemperaturen $\leq$ + 2 °C wird der Timer für Eisansatz innerhalb einer Minute auf 360 °C hochgezählt. Wenn er diesen Wert erreicht hat, erkennt die Steuerung, dass eine Vereisung möglich ist und ein entsprechendes Verfahren zur Eisansatzerkennung wird aktiviert. Erst wenn die Außentemperatur größer als 2 °C ist, beginnt der Timer wieder langsam gegen null zu zählen. Diese Geschwindigkeit des Herunterzählens hängt dabei von der Außentemperatur ab. Je größer die Außentemperatur ist, umso schneller wird der Timer wieder auf null herunter gezählt und die Eisansatzerkennung wird beendet und die Aufzeichnung der Kennlinien fortgesetzt.

Ist eine Vereisung aufgrund niedriger Temperaturen grundsätzlich möglich, beginnt die Steuerung damit, die aktuell gemessene mittlere Leistung mit der gespeicherten Kennlinie zu vergleichen. Dazu werden anhand der eingestellten Parameter für die Überwachung der Leistungskennlinie eine maximale und eine minimale Leistung zu der jeweils gemessenen mittleren Windgeschwindigkeit bestimmt.

Beispielsweise wird eine Toleranzband um die aufgezeichnete Kennlinie bestimmt, dessen Breite unterschiedlich sein kann. Beispielsweise kann eine Breite des Toleranzbereiches bis zu einer Windgeschwindigkeit von 10,5 m/s zugrunde gelegt werden. Dabei kann ein Toleranzwert verwendet werden, der den Abstand zwischen der aufgezeichneten Kennlinie und einer unteren oder oberen Grenze gibt. Anhand dieses Wertes wird mithilfe der gespeicherten Leistungskennlinie ein Leistungsfenster berechnet, in dem sich die Leistung der Anlage bewegen muss. Der untere Wert des Leistungsfensters ist der Leistungswert der gespeicherten Kennlinie, bei der gemessenen Windgeschwindigkeit abzüglich des genannten Toleranzwertes. Der obere Wert ist der zu der gemessenen Windgeschwindigkeit zuzüglich besagtem Toleranzwertes gehörende Wert der Leistungskennlinie.

Der Toleranzwert kann beispielsweise als relativer Wert der Leistungskennlinie angegeben werden und beispielsweise 75 % des betreffenden Leistungswertes der Leistungskennlinie betragen. Mit anderen Worten ist die Toleranz 25 % unter bzw. oberhalb der Kennlinie.

Sobald ein Vereisen der Rotorblätter angenommen wird und die typischerweise über 60 Sekunden gemittelte Leistung P - die auch als aktuelle Leistung $P_{Akt}$ bezeichnet werden kann - einen unteren Grenzwert $P_{min}$ unterschreitet, wird ein entsprechender Zähler um den Wert 1 erhöht. Die Anlage stoppt mit einem Status "Eisansatzerkennung: Rotor (Leistungsmessung)", sobald der Zähler den Wert 30 erreicht.

Die Anlage nimmt den Betrieb automatisch wieder auf, wenn die Außentemperatur ausreichend lange auf einem Wert von mehr als 2 °C angestiegen ist und entsprechend ein Timer für das Erkennen eines Eisansatzes wieder auf null zurückgezählt hat. In ähnlicher Weise nimmt sie den Betrieb nach Ablauf einer Blattenteisung automatisch wieder auf. Auch wenn eine Vereisung noch möglich ist, unternimmt die Anlage dann beispielsweise im Abstand von 6 Stunden einen Startversuch, um zu prüfen, ob die Rotorblätter wieder eisfrei geworden sind. Dazu wird der oben genannte Zähler von 30 auf 27 zurückgesetzt.

Sobald die Anlage gestartet ist, wird die Leistung wieder überwacht. Sind die Blätter noch vereist, dürfte dies dazu führen, dass der Zähler wieder hochzählt und die Anlage wird bereits nach drei Zählern, im vorliegenden Beispiel also nach drei Minuten, gestoppt. Sind die Blätter nicht mehr oder nur noch gering vereist, läuft der Zähler herunter und die Anlage bleibt im Betrieb. Durch diese Funktion können die Stillstandszeiten durch Eisansatz verkürzt werden.

Gemäß einer Ausführungsform einer Windenergieanlage ist eine Umluft-Blattheizung vorgesehen. Die Umluft-Blattheizung besteht aus einem Heizgebläse mit einer Leistung von 20 kW pro Blatt - bei einer anderen Ausführung sind es 25 kW pro Blatt - das im Blatt montiert ist und bis zu 72 °C warme Luft entlang der Vorderkante des Blattes zur Blattspitze treibt. Damit ist es möglich, sowohl bei stehender Anlage die Rotorblätter zu enteisen, als auch bei laufender Anlage in den meisten Fällen die Rotorblätter eisfrei zu halten. Das vorliegende Verfahren betrifft somit sowohl ein Verfahren, bei dem ein Eisansatz erkannt und behoben werden kann, als auch ein Verfahren, das im Wesentlichen präventiv eingesetzt werden kann, um Eisansatz oder zumindest weiter zunehmenden Eisansatz zu verhindern bzw. diesem vorzubeugen.

Neben einer Umluft-Blattheizung wird gemäß einer anderen Ausführungsform eine Gewebe-Heizung vorgeschlagen, die unter den Oberbegriff eines elektrischen Widerstands-Heizelementes bzw. einer elektrischen Widerstands-Heizung fällt. Hierbei wird ein in das Blatt laminiertes Drahtgeflecht über einen Trenntransformator mit einem hohen Strom erhitzt. Solche Heizungen arbeiten insbesondere mit Leistungen zwischen 8 kW und 15 kW pro Blatt. Die erläuterte Betriebsführung der Windenergieanlage kann grundsätzlich beide Arten der Blattheizung einsetzen.

Grundsätzlich kann mit einer solchen Blattheizung auch ein manuelles Enteisen vorgenommen werden. Wenn der Betrieb der Blattheizung jedoch in einem automatischen Modus ist, schaltet sich die Blattheizung ein, sobald ein Zähler einer Eisansatzerkennung unter den oben beschriebenen Kriterien einen entsprechenden Wert erreicht hat. Typischerweise muss ein solcher Zähler erst einen Wert erreichen, der wenigstens 10 Minuten entspricht. Beispielsweise bleibt die Blattheizung dann für mindestens 20 Minuten in Betrieb. Dadurch wird Eis, das sich bereits an den Rotorblättern gebildet hat, abgetaut. Der Wirkungsgrad des Rotors verbessert sich und die Zähler der Eisansatzerkennung laufen wieder gegen null, wenn die Enteisung zumindest teilweise erfolgreich war. Hierdurch wird bei einer minimalen Einschaltdauer der Heizung verhindert, dass die Anlage aufgrund von Eisansatz gestoppt werden muss.

Es ist eine Vorgabe der maximalen Bezugsleistung der Blattheizung möglich. Dieser Wert kann gemäß einer Ausführungsform zwischen 0 kW und 85 kW eingestellt werden. Der Maximalwert von 85 kW setzt sich aus etwa 3 x 25 kW für die drei Heizregister und 3 x 3,3 kW für die drei Lüfter zusammen.

Die Blattheizung bezieht dann, unter Berücksichtigung der aktuellen Anlagenleistung, im Fünf-Minuten-Mittel nicht mehr als besagte eingestellte Bezugsleistung. Wird z. B. für die Bezugsleistung ein Wert von 40 kW eingestellt, dann läuft die Blattheizung bei stehender Anlage oder 0 kW Anlagenleistung mit maximal 40 kW, nämlich 10 kW für den Lüfter und 3 x 10 kW für die Heizung. Ist der Betrieb der Blattheizung bei laufender Anlage eingeschaltet, wird die Blattheizung dann mit steigender Anlagenleistung ebenfalls mit höherer Leistung betrieben und erreicht ab 30 kW Anlagenleistung - dies können beispielsweise 45 kW bei einer anderen Anlage sein - die Maximalleistung von 70 kW, was bei einer anderen Anlage beispielsweise 85 kW sein kann.

Die minimale Heizdauer der Blattheizung kann beispielsweise zwischen einer Stunde und zehn Stunden gewählt werden. Die Heizdauer hängt in erster Linie von der eingestellten Bezugsleistung und der Außentemperatur ab. Außerdem spielen die Windgeschwindigkeit und der Grad der Vereisung eine Rolle. Erfahrungswerte haben gezeigt, dass eine Heizdauer von drei Stunden bis vier Stunden in den meisten Fällen ausreichend sein kann.

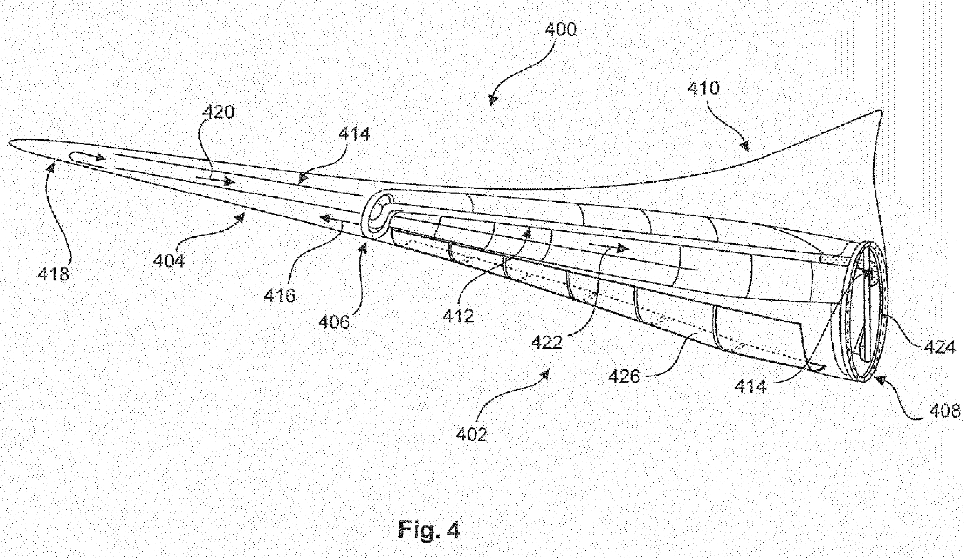

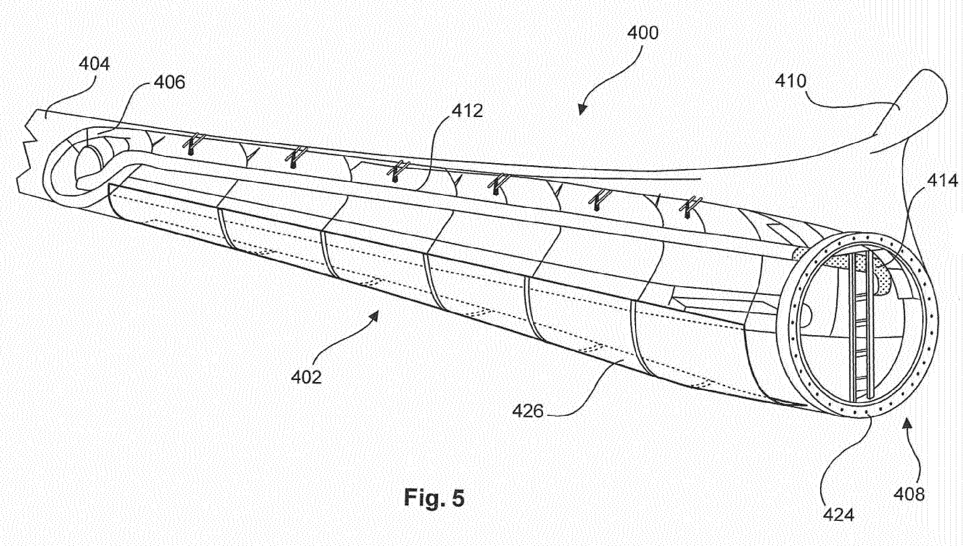

Figuren 4 und 5 zeigen eine Ausführungsform eines mehrteiligen Rotorblatts. Das Rotorblatt 400 weist einen Hauptabschnitt 402 und einen Endabschnitt 404 auf. Der Hauptabschnitt 402 weist einen Anschlussbereich 406 und einen Blattwurzelbereich 408 auf. Der Hauptabschnitt ist mit dem Endabschnitt 404 im Anschlussbereich 406 verbunden. Zudem ist ein Hinterkantensegment 410 vorhanden, der an dem Hauptabschnitt befestigt ist.

In dem Hauptabschnitt ist ein Luftleitrohr 412 als Luftleitmittel angeordnet. Das Luftleitrohr 412 ist mit einem Heizgebläse 414 zum erzeugen und Förder erwärmter Luft gekoppelt. Das Heizgebläse kann als Gebläse mit Heizregister ausgebildet sein. Das Heizgebläse 414 ist im Blattwurzelbereich 408 des Hauptabschnitts 402 angeordnet, erzeugt dort die erwärmte Luft und bläst diese in das Luftleitrohr 412. Das Luftleitrohr 412 leitet die erwärmte Luft durch den Hauptabschnitt 402 zum Anschlussbereich 406, die dort in den Endabschnitt 404 eintritt, um diesen zu erwärmen. Die erwärmte Luft wird somit durch das Luftleitrohr 412 geleitet, ohne hierbei in den Hauptabschnitt 402 auszutreten. Die in dem Luftleitrohr 412 geführte, erwärmte Luft wird somit nicht zum Erwärmen des Hauptabschnitts 402 verwendet. Statt des Luftleitmittels 412 kann bspw. auch ein Schlauch oder anderes geeignetes Mittel verwendet werden, mit dem die erwärmte Luft in diesem Sinne durch den Hauptteil geleitet wird. Das Luftleitmittel, insbesondere das Luftleitrohr kann eine Isolierung aufweisen, um eine unerwünschte Wärmeabgabe der erwärmten Luft möglichst gering zu halten.

In dem Endabschnitt 406 sind Luftleitmittel, wie Stege 414 vorgesehen, die die erwärmte Luft so durch das Innere des Endabschnittes leiten, dass der Endabschnitt hierdurch erwärmt wird. Als Stege werden bevorzugt in dem Rotorblatt vorhandene Stützstege verwendet. Die Stege leiten die erwärmte Luft auf einem Hinweg, der durch den Pfeil 416 gekennzeichnet ist, bis zu einer Rotorblattspitze 418. Kurz vor der Rotorblattspitze 418 wird die Luft umgeleitet und strömt auf einem Rückweg, der durch den Pfeil 420 gekennzeichnet ist, zurück zum Anschlussbereich 406. Durch das Erwärmen soll insbesondere eine Enteisung vorgenommen werden. Im Endabschnitt 406 kann in dem Bereich, in dem die Luft zurückströmt, der durch den Pfeil 420 gekennzeichnet ist, eine thermische Isolierung vorgesehen sein, um dort Wärmeverluste zu vermeiden.

Von dem Anschlussbereich 406 strömt die Luft durch den Hauptabschnitt 402 zurück zum Wurzelbereich 408, in dem sich das Heizgebläse 414 befindet. Hierbei strömt die Luft auf einem durch den Pfeil 422 gekennzeichneten Rückweg, im Gegensatz zum Hinweg, ohne weiteres Luftleitmittel durch den Innenraum des Hauptabschnitts.

Alternativ kann auch für diesen Rückweg ein Luftleitmittel vorgesehen sein, das eine zusätzliche Isolierung aufweisen kann, um eine Wärmeabgabe und damit Wärmeverlust zu vermeiden.

Das Heizgebläse 414 ist in dem Blattwurzelbereich 408 angeordnet, der einen Befestigungsflansch 424 aufweist zum Befestigen an einer Rotorblattnabe. Hierdurch ist das Heizgebläse 414 im Bereich der Rotorblattnabe angeordnet und dadurch für Wartungsarbeiten gut zugänglich. Es kann somit erwärmte Luft zum Beheizen des Endabschnitts 404 auf einfache Weise von einer Position in der Nähe der Rotornabe aus zugeführt werden.

Vorzugsweise, wie bei dem gezeigten Rotorblatt 400, ist der Hauptabschnitt 402 aus Metall wie z.B. Stahl gefertigt, wodurch für das Heizgebläse ein Blitzschutz realisiert wird, weil der Hauptabschnitt als Faradayscher Käfig wirkt, in dem das Heizgebläse angeordnet ist. Der Endabschnitt kann, wie im gezeigten Beispiel, aus Glasfaserverbundwerkstoff (GFK) gefertigt sein.

Zum Beheizen des Hauptabschnitts sind Heizmatten 426 vorgesehen.

## Patentansprüche

1. Verfahren zum Betreiben einer Windenergieanlage mit einem aerodynamischen Rotor mit wenigstens einem Rotorblatt, umfassend die Schritte:

   - Betreiben der Windenergieanlage in einem von der Windgeschwindigkeit abhängigen Betriebspunkt,
   - Erfassen eines Betriebsparameters des Betriebspunktes,
   - Vergleichen des erfassten Betriebsparameters mit einer vorbestimmten Referenzgröße und
   - Beheizen des wenigstens einen Rotorblatts, wenn der erfasste Betriebsparameter eine vorbestimmte Abweichung zur Referenzgröße überschreitet, wobei der Betrieb der Windenergieanlage fortgesetzt wird.

2. Verfahren nach Anspruch 1, **dadurch gekennzeichnet, dass**

   - zu der betreffenden Referenzgröße ein erster Toleranzbereich und ein zweiter Toleranzbereich vorgegeben werden, wobei
   - der erste Toleranzbereich innerhalb des zweiten Toleranzbereichs liegt, und
   - wobei das Beheizen des wenigstens einen Rotorblatts unter Fortsetzen des Betriebs der Windenergieanlage erfolgt, wenn der erfasste Betriebsparameter außerhalb des ersten Toleranzbereichs und innerhalb des zweiten Toleranzbereichs liegt und/oder
   - die Windenergieanlage gestoppt, nämlich angehalten und/oder abgeschaltet wird, wenn der erfasste Betriebsparameter außerhalb des zweiten Toleranzbereichs liegt.

3. Verfahren nach Anspruch 1 oder 2, **dadurch gekennzeichnet, dass**

   - der erfasste Betriebsparameter die Leistung ist, insbesondere die von der Windenergieanlage erzeugte elektrische Leistung, dass
   - die aktuelle Windgeschwindigkeit erfasst wird und die Referenzgröße von der Windgeschwindigkeit abhängig ist, insbesondere, dass die Referenzgröße als von der Windgeschwindigkeit abhängige Referenzkennlinie hinterlegt ist und/oder dass
   - als Referenzgröße zumindest für Teilbereiche der Windgeschwindigkeit und/oder für eine Übergangszeit ein Maximalwert der betreffenden Betriebsgröße verwendet wird.

4. Verfahren nach einem der vorstehenden Ansprüche, **dadurch gekennzeichnet, dass** zum Beheizen des wenigstens einen Rotorblatts

   - erwärmte Luft dem Rotorblatt zugeführt wird und auf einem Strömungspfad durch das Rotorblatt geleitet wird, um das Rotorblatt von innen zu beheizen und/oder dass
   - das Rotorblatt mittels wenigstens einem in dem Rotorblatt vorgesehenen elektrischen Widerstandsheizelement beheizt wird.

5. Verfahren nach einem der vorstehenden Ansprüche, **dadurch gekennzeichnet, dass**

   - eine Temperatur an oder in der Nähe der Windenergieanlage erfasst wird, und
   - die Windenergieanlage gestoppt, nämlich angehalten und/oder abgeschaltet wird, wenn die erfasste Temperatur eine vorbestimmte Mindesttemperatur unterschreitet und wenn der erfasste Betriebsparameter die vorbestimmte Abweichung zur Referenzgröße überschreitet,
   - wobei optional ein Fehlersignal erzeugt und/oder ausgegeben wird.

6. Verfahren nach einem der vorstehenden Ansprüche, **dadurch gekennzeichnet, dass**

   - eine Beheizung erst dann erfolgt, wenn der erfasste Betriebsparameter die vorbestimmte Abweichung zur Referenzgröße für eine erste vorbestimmte Mindestzeit überschritten hat,
   - ein Anhalten und/oder eine Abschaltung der Windenergieanlage erst dann erfolgt, wenn der erfasste Betriebsparameter außerhalb eines bzw. des zweiten Toleranzbereichs für eine zweite vorbestimmte Mindestzeit lag,
   - wenn die Windenergieanlage gestoppt wurde, weil der erfasste Betriebsparameter außerhalb des zweiten Toleranzbereichs lag, diese nach einer vorbestimmten Wiedereinschaltzeit wieder gestartet wird und die Windenergieanlage wieder gestoppt wird, wenn der erfasste Betriebsparameter außerhalb des zweiten Toleranzbereichs für eine dritte vorbestimmte Mindestzeit lag und die dritte vorbestimmte Mindestzeit kleiner ist als die zweite vorbestimmte Mindestzeit,
   - im Falle einer Beheizung diese für eine vorbestimmte vierte Mindestzeit aufrecht erhalten wird, und/oder
   - nach Beenden eines Heizvorgangs ein erneutes Beheizen erst nach einer vorbestimmten fünften Mindestzeit erfolgt.

7. Rotorblatt zum Befestigen an einer Nabe eines Rotors einer Windenergieanlage, das Rotorblatt umfasst

   - einen Hauptabschnitt, zum Befestigen an der Nabe und
   - einen Endabschnitt zum Befestigen an dem Hauptabschnitt und/oder an einem Zwischenabschnitt,

   der Hauptabschnitt umfasst

   - einen Blattwurzelbereich zum Befestigen an der Nabe und
   - einen Anschlussbereich zum Befestigen mit dem Endabschnitt und/oder dem bzw. einem Zwischenabschnitt, wobei

   in dem Hauptabschnitt ein Luftleitmittel zum Durchleiten erwärmter Luft durch den Hauptabschnitt vom Wurzelbereich zum Endabschnitt vorgesehen ist, wobei das Luftleitmittel so ausgestaltet ist, dass die erwärmte Luft beim Durchleiten nicht mit dem Hauptabschnitt in Kontakt kommt.

8. Rotorblatt nach Anspruch 7, **dadurch gekennzeichnet, dass**
   in dem Hauptabschnitt Bereiche mit einer flächigen Heizvorrichtung zum Beheizen des Rotorblattes und Bereiche mit einer thermischen Isolierung zum Verhindern eines Wärmeverlustes aus dem Rotorblatt vorgesehen sind,
   der Hauptabschnitt im Wesentlichen aus Metall, insbesondere Stahl gefertigt ist,
   der Endabschnitt im Wesentlichen auf einem Verbundwerkstoff, insbesondere glasfaserverstärktem Kunststoff gefertigt ist und/oder
   der Endabschnitt partiell nach außen isoliert ist.

9. Windenergieanlage mit einem Rotor, insbesondere nach Anspruch 7 oder 8 mit wenigstens einem Rotorblatt und einer Steuerung zum Ausführen eines Verfahrens nach einem der vorstehenden Ansprüche.

10. Windenergieanlage nach Anspruch 9, **dadurch gekennzeichnet, dass** ein Anemometer, insbesondere ein Ultraschall-Anemometer zum Messen der aktuellen Windgeschwindigkeit vorgesehen ist.

11. Windenergieanlage nach Anspruch 9 oder 10, **dadurch gekennzeichnet, dass** zum Ausführen des Verfahrens zum Betreiben der Windenergieanlage eine zentrale Steuereinheit vorgesehen ist und/oder dass eine Heizvorrichtung zum Beheizen des wenigstens einen Rotorblatts vorgesehen ist.

12. Verfahren zum Betreiben einer Windenergieanlage mit einem aerodynamischen Rotor mit wenigstens einem Rotorblatt, insbesondere nach Anspruch 1, umfassend die Schritte:

- Überwachen, ob eine Vereisung an der Windenergieanlage vorhanden ist, insbesondere mittels eines Eissensor zur Erkennung eines Eisansatzes,
- Beheizen des wenigstens einen Rotorblatts, wenn ein Eisansatz detektiert wurde, wobei der Betrieb der Windenergieanlage fortgesetzt wird.

**13.** Verfahren zum Betreiben eines Windparks, umfassend mehrere, miteinander kommunizierende Windenergieanlagen, jeweils mit einem aerodynamischen Rotor mit wenigstens einem Rotorblatt, umfassend die Schritte

- Überwachen, ob eine Vereisung an wenigstens einer der Windenergieanlagen vorhanden ist, insbesondere mittels eines Eissensor zur Erkennung eines Eisansatzes,
- Beheizen des wenigstens einen Rotorblatts jeder der Windenergie, wenn ein Eisansatz detektiert wurde, wobei der Betrieb der Windenergieanlagen des Windparks fortgesetzt wird.

**14.** Verfahren nach Anspruch 12, **dadurch gekennzeichnet, dass** wenigstens eines der Merkmale der Ansprüche 1 bis 6 angewendet wird.

**15.** Windpark umfassend mehrere, miteinander kommunizierende Windenergieanlagen, jeweils mit einem aerodynamischen Rotor mit wenigstens einem Rotorblatt, insbesondere nach Anspruch 7 oder 8, **dadurch gekennzeichnet, dass** ein Verfahren zum Betreiben nach Anspruch 13 oder 14 implementiert ist.

Fig. 1

Fig. 2

**Fig. 3**

Fig. 4

Fig. 5

EP 3 118 449 A1

Europäisches
Patentamt

European
Patent Office

Office européen
des brevets

**EUROPÄISCHER RECHERCHENBERICHT**

**Nummer der Anmeldung**

EP 16 17 8516

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2007/129907 A2 (NORSK MILJOEKRAFT FORSKNING OG [NO]; MORTENSEN KJELL [NO]) 15. November 2007 (2007-11-15) | 1,4,9-12 | INV. F03D7/02 F03D7/04 |
| Y | * Zusammenfassung; Abbildungen 2, 3 * * Seite 5, Zeile 24 - Zeile 27 * * Seite 7, Zeile 14 - Seite 9, Zeile 31 * ----- | 2,3,5,6, 13-15 | F03D1/06 F03D80/40 |
| Y,D | WO 2004/104412 A1 (WOBBEN ALOYS [DE]) 2. Dezember 2004 (2004-12-02) * Zusammenfassung; Abbildungen * * Seite 5, Zeile 25 - Seite 14, Zeile 23 * ----- | 2,3,5,6 | |
| Y | EP 2 055 940 A2 (GEN ELECTRIC [US]) 6. Mai 2009 (2009-05-06) * Zusammenfassung; Abbildungen 3-5 * * Absatz [0010] - Absatz [0019] * ----- | 13-15 | |
| X | US 6 890 152 B1 (THISTED BO [US]) 10. Mai 2005 (2005-05-10) * Abbildungen 2, 4 * * Spalte 3, Zeile 15 - Spalte 4, Zeile 6 * ----- | 1,3 | |
| X | DE 195 28 862 A1 (WOBBEN ALOYS [DE]) 6. Februar 1997 (1997-02-06) * Abbildungen * * Spalte 3, Zeile 22 - Spalte 4, Zeile 42 * ----- | 7,8 | RECHERCHIERTE SACHGEBIETE (IPC) F03D |
| X | DE 200 14 238 U1 (WONNER MATTHIAS [DE]) 7. Juni 2001 (2001-06-07) * Abbildungen 1-3 * * Seite 3, Absatz 2.4 - Seite 4 Mitte * ----- | 7,8 | |
| X | DE 196 21 485 A1 (SCHULTE FRANZ JOSEF [DE]) 12. März 1998 (1998-03-12) * Abbildung 1 * * Spalte 2, Zeile 66 - Spalte 3, Zeile 37 * ----- | 7,8 | |

Der vorliegende Recherchenbericht wurde für alle Patentansprüche erstellt

| Recherchenort | Abschlußdatum der Recherche | Prüfer |
|---|---|---|
| Den Haag | 14. Dezember 2016 | Altmann, Thomas |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

Europäisches
Patentamt

European
Patent Office

Office européen
des brevets

**Nummer der Anmeldung**

EP 16 17 8516

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder
Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☒ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

**MANGELNDE EINHEITLICHKEIT
DER ERFINDUNG
ERGÄNZUNGSBLATT B**

**Nummer der Anmeldung**

EP 16 17 8516

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-15

   Verfahren zum Betreiben einer Windenergieanlage bzw. eines Windparks; Rotorblatt; Windpark;

1.1. Ansprüche: 1-6, 9-11

   Windenergieanlage und Verfahren zum Betreiben einer Windenergieanlage

1.2. Ansprüche: 7, 8

   Rotorblatt mit Luftleitmittel zum Durchleiten erwärmter Luft

1.3. Ansprüche: 12-15

   Windpark und Verfahren zum Betreiben eines Windparks bzw. einer Windenergieanlage

   ---

Bitte zu beachten dass für alle unter Punkt 1 aufgeführten Erfindungen, obwohl diese nicht unbedingt durch ein gemeinsames erfinderisches Konzept verbunden sind, ohne Mehraufwand der eine zusätzliche Recherchengebühr gerechtfertigt hätte, eine vollständige Recherche durchgeführt werden konnte.

**ANHANG ZUM EUROPÄISCHEN RECHERCHENBERICHT
ÜBER DIE EUROPÄISCHE PATENTANMELDUNG NR.**

EP 16 17 8516

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-12-2016

| Im Recherchenbericht angeführtes Patentdokument | Datum der Veröffentlichung | Mitglied(er) der Patentfamilie | Datum der Veröffentlichung |
|---|---|---|---|
| WO 2007129907 A2 | 15-11-2007 | CA 2651594 A1<br>EP 2015990 A2<br>NO 324138 B1<br>RU 2008148134 A<br>US 2010224621 A1<br>WO 2007129907 A2 | 15-11-2007<br>21-01-2009<br>03-09-2007<br>20-06-2010<br>09-09-2010<br>15-11-2007 |
| WO 2004104412 A1 | 02-12-2004 | AR 044549 A1<br>AT 375448 T<br>AU 2004240994 A1<br>AU 2009202364 A1<br>BR PI0410476 A<br>CA 2526032 A1<br>CN 1795332 A<br>DE 10323785 A1<br>DK 1642026 T3<br>EP 1642026 A1<br>ES 2293269 T3<br>JP 4690327 B2<br>JP 2006528307 A<br>JP 2009203985 A<br>KR 20060008327 A<br>NZ 543684 A<br>US 2007154310 A1<br>US 2011081226 A1<br>WO 2004104412 A1 | 21-09-2005<br>15-10-2007<br>02-12-2004<br>02-07-2009<br>30-05-2006<br>02-12-2004<br>28-06-2006<br>16-12-2004<br>11-02-2008<br>05-04-2006<br>16-03-2008<br>01-06-2011<br>14-12-2006<br>10-09-2009<br>26-01-2006<br>28-11-2008<br>05-07-2007<br>07-04-2011<br>02-12-2004 |
| EP 2055940 A2 | 06-05-2009 | CN 101440782 A<br>EP 2055940 A2<br>US 2009110539 A1 | 27-05-2009<br>06-05-2009<br>30-04-2009 |
| US 6890152 B1 | 10-05-2005 | KEINE | |
| DE 19528862 A1 | 06-02-1997 | AT 198370 T<br>CA 2228145 A1<br>CZ 9800314 A3<br>DE 19528862 A1<br>DK 0842360 T3<br>EP 0842360 A1<br>NO 980487 A<br>WO 9706367 A1 | 15-01-2001<br>20-02-1997<br>15-07-1998<br>06-02-1997<br>19-03-2001<br>20-05-1998<br>04-02-1998<br>20-02-1997 |
| DE 20014238 U1 | 07-06-2001 | KEINE | |
| DE 19621485 A1 | 12-03-1998 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10323785 A1